# EUROPEAN PATENT APPLICATION

(11) **EP 2 667 671 A1**
(43) Date of publication of application: **27.11.2013**
(21) Application number: 12360042.1
(22) Date of filing: 21.05.2012
(51) Int. Cl.: H04W 52/32, H04W 52/40

(54) **A multi-flow network**

(71) Applicant: Alcatel Lucent, 75007 Paris (FR)
(72) Inventor: Wong, Shin Horng, Chippenham, Wiltshire SN15 3YB (GB); Baker, Matthew P. J., Canterbury, kent CT2 9DB (GB)
(74) Representative: Script IP Limited

(57) **Abstract**

A method of controlling gain of a physical channel used for communication of control information between user equipment and at least two base stations in a multi-flow telecommunications network, user equipment, and a computer program product operable to perform that method. The method comprises: determining an indication of a gain control restriction; receiving a gain control message from one of the at least two base stations; assessing whether implementing a change in accordance with the gain control message would be in accordance with the gain control restriction, and, if so, implementing the change in gain in accordance with the gain control message. Aspects and embodiments described aim to control a situation where user equipment is receiving orders in relation to the control of a gain implemented in respect of a control channel on multiple cells supported by different base stations, those base stations being operable to instruct both increases and decreases independently.

## Description

### FIELD OF THE INVENTION

The present invention relates to a method of controlling gain of a physical channel used for communication of control information between user equipment and at least two base stations in a multi-flow telecommunications network, user equipment and a computer program product operable to perform that method.

### BACKGROUND

Wireless telecommunications networks are known. In a cellular system, radio coverage is provided by area. Those areas of radio coverage are known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers. User equipment and base stations may be operable to perform multi-flow downlink communications. According to such a multi-flow enabled network, user equipment is operable to receive independent streams of data from base stations. In multi-flow High Speed Downlink Packet Access (HSDPA) networks (also known as multi-point HSDPA networks) user equipment is operable to receive two or more independent HSDPA streams from different cells. It will be appreciated that in an intra base station scenario, user equipment may receive two or more independent HSDPA steams from a single base station in different cells. The cells involved in a multi-flow HSDPA scenario may thus belong to the same base station or to different base stations.

Multi-flow operation allows for all increase in data traffic throughput given a fixed amount of radio spectrum but may impact adversely upon other functionality provided in a network.

Accordingly, it is proposed to address efficient operation of a network enabled with multi-flow operational capacity.

### SUMMARY

A first aspect provides a method of controlling gain of a physical channel used for communication of control information between user equipment and at least two base stations in a multi-flow telecommunications network, the method comprising: determining an indication of a gain control restriction; receiving a gain control message from one of the at least two base stations; assessing whether implementing a change in gain in accordance with the gain control message would be in accordance with the gain control restriction and, if so, implementing the change in gain in accordance with the gain control message.

According to multi-flow HSDPA (MF-HSDPA) transmission or multi-point HSDPA transmission (MP-HSDPA), user equipment is operable to receive High Speed Downlink Packet Access (HSDPA) streams simultaneously from two or more cells. Those cells may belong to different base stations. Such parallel HSDPA transmissions are typically carried on the same radio frequency and they can be of different HS-DSCH streams. The cells participating in multi-flow operation comprise a serving cell and at least one assisting serving cell. The serving cell is the cell that the user equipment would be attached to if it were not operating in a multi-flow transmission mode. The assisting serving cell provides an additional HSDPA stream to that user equipment. In a non-multi-flow HSDPA network, typically the HSDPA downlink system is designed for single or serving cell operation and thus an uplink control channel transmitted by user equipment (for example, an HS-DPCCH (High Speed Downlink Packet Control Channel)) is designed to be transmitted to only reach the base station supporting a serving cell. In contrast, uplink E-DCH (Enhanced-Data Channels) are designed to be transmitted by user equipment and reach more than one cell, particularly for user equipment operating according to soft handover techniques.

The uplink control channel (HS-DPCCH) is typically transmitted at a power offset relative to a pilot channel (DPCCH). The power offset over the pilot channel on which the uplink control channel is transmitted is typically termed the β*ₕₛ*.

It will be appreciated that if user equipment is operating in a multi-flow capable network, more than one base station or more than one cell transmits HSDPA stream to user equipment. Thus, it can be advantageous for the uplink control channel, for example, the HS-DPCH, transmitted by user equipment to reach each of the base stations supporting those cells. It will thus be appreciated that higher transmit powers on the uplink control channel may be required to enable transmissions made on that channel by user equipment to reach assisting serving cells.

Use of HS-SCCH orders to signal a β*ₕₛ* to user equipment is possible. According to such a regime, layer 1 signalling between a base station and user equipment can be used to increase or decrease uplink control channel (for example, HS-DPCCH) gain. Such signalling can be particularly useful for an assisting serving cell which suffers from poorer uplink radio conditions and thus can itself increase uplink control channel gain by issuing such an order to user equipment. Such an order may also be useful for a serving cell in a heterogeneous network where the serving cell is a macro cell and the non-serving and assisting cells are small cells; for example femto or pico cells. In such a scenario, a macro serving cell may suffer from poor uplink since the small cells may use their ability to reduce gain or power control down uplink transmissions. Thus, it is beneficial that orders transmitted from a base station to user equipment in relation to power control of the uplink control channel can be made by both the serving cell and the assisting serving cells. However, it will be appreciated that a ping-pong of β*ₕₛ* may occur where the serving and assisting serving cells send opposing orders. That is to say, one may be operable to send an order to reduce β*ₕₛ* whilst the other sends an order to increase β*ₕₛ*.

Aspects described aim to control the situation where user equipment is receiving orders in relation to the control of β*ₕₛ* in multiple cells supported by different base stations.

It will be appreciated by those skilled in the art that the problem faced in relation to the uplink control channel is that compared to data channels sent in multi-flow operation, the uplink control channel is not subject to strict power control but, rather, to gain control. It will be understood that β*ₕₛ* is a specific gain or offset relative to pilot power of user equipment and that pilot power is set by particular power control loops within the network. Furthermore, it will be understood that on the control channel the gain parameter has been configured such that it is a configurable offset relative to pilot power.

In the case of data channels and associated control channels within E-DCH channels in a multi-flow network, networks are currently operable to only accept messages to increase pilot channel or to power up from a serving cell. An assisting serving cell cannot request that a power is increased and can only request a decrease in power. The difference on a single data channel being transmitted by user equipment in a multi-flow capable network is that if the assisting cell cannot receive information from user equipment it may be that someone else can and, in particular, the serving cell is operable to ensure that it is able to receive data from the user equipment. It will be understood that assisting serving cells are able to request a power-down so that they can mitigate interference caused by user equipment transmissions.

Furthermore, in the case of uplink control channels and gain control thereof, implementation of a network in which a plurality of base stations operating in multi-flow mode are each independently able to instruct both an increase and decrease in gain on the uplink control channel at user equipment can lead to unnecessary ping-ponging.

Furthermore, it will be understood that since requests to increase and decrease gain from each base station are received at user equipment and implemented by means of a layer 1 message, typically an HS-SCCH message, different base stations within a network may be operable to give different instructions to user equipment. The only way in which those base stations could discover what message was being sent to user equipment by other base stations participating in multi-flow operation would be via RNC signalling which is particularly slow.

It will be appreciated that according to some embodiments the orders to increase and decrease gain in relation to the control channel may comprise either absolute values of an offset, β*ₕₛ*, or relative changes, an incremental step up or step down.

In one embodiment, the gain control restriction comprises an indication of a minimum gain of the physical control channel. Accordingly, implementation of a lower bound for β*ₕₛ* can ensure that in response to receiving a gain control message from a base station, for example, an HS-SCCH order to reduce power offset, user equipment may not reduce the gain offset below the lower bound.

In one embodiment, the indication of minimum gain of the physical control channel corresponds to a minimum gain of the physical channel required to ensure the physical channel reaches one of the at least two base stations operable to support a serving cell. Accordingly, embodiments may be operable to prevent any cells or base station supporting cells requesting a reduction of the control channel offset gain level to a level that cannot be received by a serving cell.

According to some embodiments, the lower bound of gain (for example, β*ₕₛ*) is the β*ₕₛ* configured for non-multi-flow operation within a network. It will be understood that that offset is typically configured at the RRC layer and ensures that user equipment is operable to communicate with a serving base station. By ensuring that the offset in gain does not fall below that predetermined threshold value, it is possible to guarantee that control channel quality will not deteriorate below that of legacy single cell HSDPA operation.

According to some embodiments, the lower bound of the level of offset may be configured for user equipment prior to receiving any orders to increase the offset; that is to say, the lower bound of gain may be set such that on entry to multi-flow operation the level of gain is stored and used as a lower bound.

In one embodiment, the method further comprises determining that the user equipment is no longer operating to communicate with at least two base stations in the multi-flow telecommunications network and changing the gain to the minimum gain of the physical channel required to ensure the physical channel reaches one of the at least two base stations operable to support a serving cell. That is to say, if user equipment is operable to revert back to non-multi-flow operation when, for example, assisting serving cells are deactivated, the gain level implemented by user equipment may return to a preset threshold. It will be noted that there may be more than one assisting serving cell, in which case the user equipment can be operable to revert to a lower bound gain level once all assisting serving cells are deactivated.

In one embodiment, the restriction comprises initiation of a timer during which the user equipment is operable to prevent gain control messages having a predetermined characteristic being implemented by the user equipment. Accordingly, user equipment may be operable to implement a time hysteresis in relation to the each way reduction of gain, such that user equipment can be operable to disregard orders to reduce the power offset if they are received within a certain time window after receipt of an order to increase the power offset. Accordingly, user equipment may impose a timer during which some gain control messages may be ignored by user equipment.

In one embodiment, the method comprises initiating the timer on reception of a gain control message requesting an increase in gain from one of the at least two base stations. Accordingly, if a base station has requested an increase in offset, it is likely that it is having difficulty receiving the control message from user equipment and, thus, an immediate reduction will not be helpful to operation of that particular base station at which the request to increase originated.

In one embodiment, the predetermined characteristic comprises a request to decrease gain being implemented by said the equipment. Accordingly, if a request to increase gain has been received, user equipment may be operable, whilst a timer is running, to ignore requests to decrease gain.

According to one embodiment, the predetermined characteristic comprises a request from one of the at least two base stations supporting a serving cell.

In one embodiment, the predetermined characteristic comprises a request from one of the at least two base statins supporting an assisting serving cell.

It will be understood that in some embodiments, the restrictions may comprise ignoring orders to decrease an offset if they come from certain cells, for example, from a serving cell or from an assisting cell, or from one or more predetermined sets of cells. It will be understood that in one embodiment it may be that the offset will not be reduced below a particular threshold, for example, that which ensures contact can be maintained with a serving cell, that threshold being sufficient for the serving cell to receive the control message to the control channel. Any increase to the offset beyond that threshold is likely to be more than sufficient for the serving cell to receive the control message and increases beyond that can cause interference. As a result of managing its Rise over Thermal, the base station supporting a serving cell may be operable to reduce grants to user equipment and, thus, there is no incentive for the serving cell to increase the offset.

It will be understood that embodiments may be implemented such that such factors may be taken into account.

In one embodiment, if the request to decrease gain is received from the one of said at least two base stations that sent a message requesting an increase in gain which triggered the timer, the request for decrease is implemented by the user equipment. According to such an embodiment, before a timer expires, user equipment is operable to ignore all orders to reduce gain from all cells except from the cell which issued an increase order which resulted in the timer being set in the first place. According to some embodiments, user equipment may be operable to decrease gain in the cell asking for a reduction or decrease is the most recent cell to have asked for an increase in gain.

Accordingly, it will be understood that the issue of ping-ponging offsets is typically due to different base stations supporting different cells, rather than due to operation within the same cell, and that if the base station which initially requested an increase desires a decrease it is likely that that decrease message ought to be implemented by user equipment.

In one embodiment, the predetermined characteristic comprises a request to reduce gain of the physical channel past a selected threshold. Accordingly, any request received by user equipment which attempts to reduce gain beneath a predetermined threshold will be ignored.

In one embodiment, the selected threshold comprises a gain level implemented at the user equipment when initiating the timer. According to such an embodiment, when an order to increase an offset is received, the user equipment may be operable to initiate a timer. For the duration of that timer, user equipment may be allowed to reduce an offset but cannot reduce it below a level which resulted from the initial order to start a timer. That is to say, if an order increases the offset to a value A, then, for the duration of the timer triggered by that order, user equipment may be operable to ensure that an offset is not reduced below value A.

In one embodiment, the gain control restriction comprises considering gain control messages received by the user equipment from the at least two base stations during a predetermined time period, and assessing comprises selecting and implementing one of the gain control messages requesting a largest increase in gain received during the predetermined time period. According to such an embodiment, if multiple orders have been received by user equipment before it implements an order (for example, within a certain number of Transmit Time Intervals), user equipment may be operable to implement whichever order has requested the highest increase in gain offset.

A second aspect provides a computer program product operable, when executed on a computer, to perform the method of the first aspect.

A third aspect provides user equipment operable to control gain of a physical channel used for communication of control information between the user equipment and at least two base stations in a multi-flow telecommunications network, the user equipment comprising: determination logic operable to determine an indication of a gain control restriction; reception logic operable to receive a gain control message from one of the at least two base stations; assessment logic operable to assess whether implementing a change in gain in accordance with the gain control message would be in accordance with the gain control restriction, and implementing logic operable to implement the change in gain in accordance with the gain control message if it is assessed to be in accordance with the gain control restriction.

In one embodiment, the gain control restriction comprises an indication of minimum gain of the physical control channel.

In one embodiment, the indication of minimum gain of the physical control channel corresponds to a minimum gain of the physical channel required to ensure the physical channel reaches one of the at least two base stations operable to support a serving cell.

In one embodiment, the user equipment further comprises determination logic operable to determine that the user equipment is no longer operating to communicate with at least two base stations in the multi-flow telecommunications network and implementation operable to change the gain to the minimum gain of the physical channel required to ensure the physical channel reaches one of the at least two base stations operable to support a serving cell.

In one embodiment, the user equipment further comprises timer initiation logic operable to prevent gain control messages having a predetermined characteristic being implemented by the user equipment.

In one embodiment, the timer initiation logic is operable to initiate the timer on reception of a gain control message requesting an increase in gain from one of the at least two base stations.

In one embodiment, the predetermined characteristic comprises a request to decrease gain implemented by the user equipment.

In one embodiment, the predetermined characteristic comprises a request from one of the at least two base stations supporting a serving cell.

In one embodiment, the predetermined characteristic comprises a request from one of the at least two base stations supporting an assisting serving cell.

In one embodiment, the user equipment implementation logic is operable to implement a request for a decrease in gain if the requested decrease gain is received from one of the at least two base stations that sent a message requesting an increase in gain which triggered the timer.

In one embodiment, the predetermined characteristic comprises a request to reduce gain of the physical channel past a selected threshold.

In one embodiment, the selected threshold comprises a gain level implemented at the user equipment when initiating the timer.

In one embodiment, the gain control restriction comprises considering gain control messages received by the user equipment from the at least two base stations during a predetermined time period; and assessing comprises selecting and implementing one of the gain control messages requesting a largest increase in gain received during the predetermined time period.

Further particular and preferred aspects are set out in the accompanying independent and dependent claims. Features of the dependent claims may be combined with the features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further with reference to the accompanying drawings, in which:
Figure 1 illustrates the main components of a wireless telecommunications network according to one embodiment;
Figure 2 illustrates schematically user equipment and base stations operable to perform multi-flow downlink communications; and
Figure 3 illustrates a series of events occurring to user equipment capable of multi-flow operation according to one embodiment.

### DESCRIPTION OF THE EMBODIMENTS

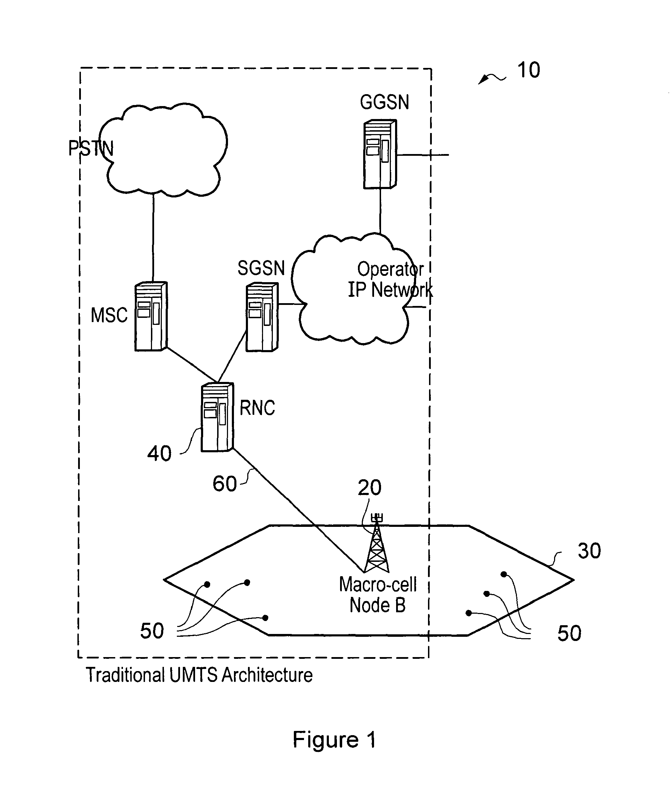

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations are provided and distributed geographically in order to provide a wide area of radio coverage to user equipment 50. When user equipment is within an area served by a base station 30, communications may be established between the user equipment and the base station over associated radio links. Each base station typically supports a number of sectors within a geographical area of service 30.

Typically, a different antenna within a base station supports each associated sector. Each base station 20 typically has multiple antennas. It will be appreciated that Figure 1 illustrates a small sub-set of a total number of user equipment and base stations that may be present in a typical communications system 10. According to the network shown in Figure 1, the wireless communications system is managed by a Radio Network Controller (RNC) 40. The RNC 40 controls operation of the wireless telecommunications system by communicating with a plurality of base stations over a backhaul communications link 60. The RNC also communicates with user equipment via each base station and, thus, effectively manages a region of the entire wireless communications system.

User equipment communicates with a base station 20 by transmitting data and information on channels known as uplink or reverse channels, and base station 20 communicates with user equipment 50 by transmitting data and information on radio channels known as downlink or forward channels.

It will be appreciated that each base station may support one or more "cells" in each sector. A cell typically operates on one frequency. If a base station operates to provide two frequencies to user equipment in a geographical area, the geographical coverage of each of those frequencies is referred to as a cell. Each cell supported by a base station may also comprise sectors as referred to above.

It will be appreciated that Figure 1 illustrates a communications network 10 according to one Radio Access Technology (RAT). It will be appreciated that alternative Radio Access Technologies are also known and that aspects and embodiments described herein may be used in relation to those Radio Access Technologies. In particular, LTE or 4G operate in a similar manner to that described above. However, base stations or node Bs are typically replaced by E node Bs and RNCs and a core network functionality is typically provided in such an LTE network by mobility management entities and packet gateways and serving gateways.

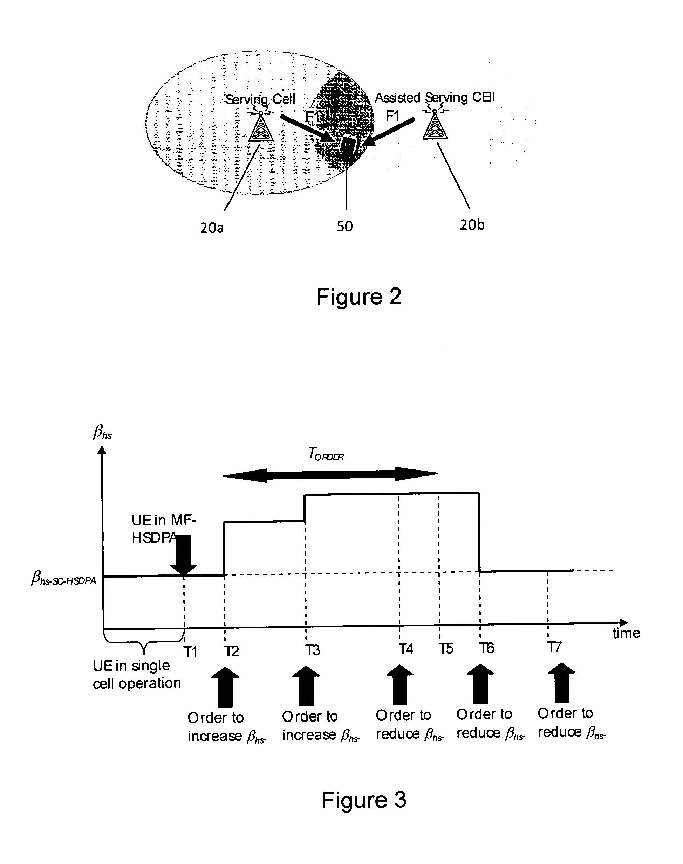

Figure 2 illustrates schematically user equipment and base stations operable to perform multi-flow downlink communications. According to such a multi-flow network, user equipment 50 is operable to receive independent streams of data from base stations 20a and 20b. In multi-flow High Speed Downlink Packet Access networks (HSDPA networks, also known as multi-point HSDPA networks) user equipment is operable to receive two or more independent HSDPA streams from different cells.

In a scenario illustrated schematically in Figure 2, those cells, both provided on frequency Fl, are supported by different base stations 20a, 20b. It will be appreciated that in an intra base station scenario, user equipment 50 may receive two or more independent HSDPA streams from a single base station in different cells. The cells involved in a multi-flow HSDPA scenario may belong to the same base station or to different base stations.

In a multi-flow HSDPA scenario, the cell that the user equipment is primarily attached to is referred to as the serving cell. In the scenario illustrated schematically in Figure 2, base station 20a supports a serving cell. Other cells which stream HSDPA packets to user equipment are known as assisting serving cells. In Figure 2, base station 20b supports an assisting serving cell.

It will be appreciated that in multi-flow or multi-point operation the streams of data sent to user equipment are completely independent. This is different to a soft or softer handover scenario in which streams can be used to reinforce each other and where a packet fails on one stream it may be received on the other. That is to say, a multi-flow scenario aids overall throughput by providing two separate streams of data to user equipment using, on occasion, the same frequency resource.

Multi-Point (also known as Multi-Flow) High Speed Downlink Packet Access operation is particularly useful for user equipment operating in an overlapping coverage area of two cells. It will be appreciated that that overlap area may occur at the edge of two cells supported by two different base stations. In overlapping coverage areas the user equipment can receive two or more streams of HSDPA traffic, one stream from each cell.

It will therefore be appreciated that MP-HSDPA (Multi-Point High Speed Downlink Packet Access) operation provides a telecommunications network with the ability to support higher total throughput than can be realised via each cell individually and, thus, can offer an improvement to user equipment operation in regions where, typically, throughput and operation may be most compromised; that is to say, at a cell edge.

Although aspects and embodiments described herein have utility across a macro cell network, it will be appreciated that many aspects and embodiments described have particular relevance to femto cell deployments. It will be appreciated that each small cell (for example, femto cell) may have a throughput which can be limited when compared with a typical macro cell throughput. For example, backhaul used by femto cells and small cells is often throughput limited. Many aspects of multi-point HSDPA usage described in relation to a macro cell network can be re-used within a femto cell network.

According to multi-flow HSDPA (MF-HSDPA) transmission or multi-point HSDPA transmission (MP-HSDPA), user equipment is operable to receive High Speed Downlink Packet Access (HSDPA) streams simultaneously from two or more cells. Those cells may belong to different base stations. Such parallel HSDPA transmissions are typically carried on the same radio frequency and they can be of different HS-DSCH streams. The cells participating in multi-flow operation comprise a serving cell and at least one assisting serving cell. The serving cell is the cell that the user equipment would be attached to if it were not operating in a multi-flow transmission mode. The assisting serving cell provides an additional HSDPA stream to that user equipment. In a non-multi-flow HSDPA network, typically the HSDPA downlink system is designed for single or serving cell operation and thus an uplink control channel transmitted by user equipment (for example, an HS-DPCCH (High Speed Downlink Packet Control Channel)) is designed to be transmitted to only reach the base station supporting a serving cell. In contrast, uplink E-DCH (Enhanced-Data Channels) are designed to be transmitted by user equipment and reach more than one cell, particularly for user equipment operating according to soft handover techniques.

The uplink control channel (HS-DPCCH) is typically transmitted at a power offset relative to a pilot channel (DPCCH). The power offset over the pilot channel on which the uplink control channel is transmitted is typically termed the β*ₕₛ*.

It will be appreciated that if user equipment is operating in a multi-flow capable network, more than one base station or more than one cell transmits an HSDPA stream to user equipment. Thus, it can be advantageous for the uplink control channel, for example, the HS-DPCCH, transmitted by user equipment to reach each of the base stations supporting those cells. It will thus be appreciated that higher transmit powers on the uplink control channel may be required to enable transmissions made on that channel by user equipment to reach assisting serving cells.

Use of HS-SCCH orders to signal a β*ₕₛ* to user equipment is possible. According to such a regime, layer 1 signalling between a base station and user equipment can be used to increase or decrease uplink control channel (for example, HS-DPCCH) gain. Such signalling can be particularly useful for an assisting serving cell which suffers from poorer uplink radio conditions and thus can itself increase uplink control channel gain by issuing such an order ... user equipment. Such an order may also be useful for a serving cell in a heterogeneous network where the serving cell is a macro cell and the non-serving and assisting cells are small cells; for example femto or pico cells. In such a scenario, a macro serving cell may suffer from poor uplink since the small cells may use their ability to reduce gain or power control down uplink transmissions. Thus, it is beneficial that orders transmitted from a base station to user equipment in relation to power control of the uplink control channel can be made by both the serving cell and the assisting serving cells. However, it will be appreciated that a ping-pong of β*ₕₛ* may occur where the serving and assisting serving cells send opposing orders. That is to say, one may be operable to send an order to reduce β*ₕₛ* whilst the other sends an order to increase β*ₕₛ*.

Aspects described aim to control the situation where user equipment is receiving orders in relation to the control of β*ₕₛ* in multiple cells supported by different base stations.

One option would be to allow control orders to be sent by only one base station or cell. For example, an order may be sent only by an assisting serving cell or only by the serving cell. However, according to such an arrangement, the usefulness of such a layer 1 order may be restricted. It will be appreciated that there are benefits in having both serving and assisting cells with an ability to issue an order in relation to gain available to transmit an uplink control channel. If one cell increases the power offset, any other cells are unable to request a reduction in interference if an increase in power offset is no longer required. It is possible also to arrange for the control orders to only be operable to increase a power offset. Although such an arrangement could solve the problem of having opposing orders from different base stations operating in a multi-flow network, removal of the ability for a base station to reduce the power offset (β*ₕₛ*) may lead to excessive interference within the network. It will also be appreciated that in order to manage Rise over Thermal (RoT) at a base station due to an increase in uplink control channel transmission power, a base station may operate to power control down the pilot channel transmitted by a base station. Reducing the pilot channel may adversely affect reception of other uplink channels transmitted by user equipment, the powers of which are all set in relation to the pilot channel, and also may reduce a resource grant made to the user equipment which, in turn, would typically reduce the data rate at which user equipment could transmit data.

Before describing embodiments in any detail, a brief overview will now be provided. Aspects aim to define restrictions in relation to the reduction of power offset of an uplink control channel, for example, HS-DPCCH, in which some orders received by user equipment to reduce or increase power offsets will be partially or fully disregarded by user equipment.

According to some embodiments, restrictions on the reduction of power offset may comprise one or more of various particular implementations. For example: according to one embodiment, a lower bound may be implemented for β*ₕₛ* such that, in response to receiving an HS-SCCH order to reduce power offset, user equipment is not operable to reduce power offset below a lower bound.

According to a further embodiment, a time hysteresis may be implemented in relation to the reduction of β*ₕₛ* such that user equipment is operable to disregard orders to reduce power offset if those orders are received within a certain time window after receipt of an order to increase power offset.

It will be appreciated that such aspects aim to prevent any user equipment reducing its uplink control channel to transmit at such a level that it cannot be received by the primary or serving base station. As a result, any assisting cells, in embodiments where a lower bound is introduced, are unable to instruct reduction of the control channel to such a level.

According to one embodiment, the lower bound of β*ₕₛ* can be β*ₕₛ* configured for non-multi-flow operation. That is to say, the lower bound may be that which would be appropriate in a single cell HSDPA network in which the power offset is generally configured at a higher level (for example, RRC layer) within the network. Such a lower bound can be referred to β*_{hs-SC-HSDPA}*. That lower bound recognizes that β*_{hs-SC-HSDPA}* is configured such that a non-multi-flow network in which RRC signalling is used ensures that a serving cell can receive the uplink control channel, for example, HS-DPCCH. Thus, by ensuring that β*ₕₛ* does not fall below β*_{hs-SC-HSDPA},* embodiments guarantee that the uplink control channel quality will not deteriorate below that of a legacy single cell HSDPA mode of operation. According to some embodiments, below a bound may be the level of β*ₕₛ* configured for user equipment prior to receiving any orders to increase β*ₕₛ*.

In some embodiments, a user equipment may be operable to revert back to a lower bound (for example, β*_{hs-SC-HSDPA}*) in the event that an assisting serving cell is deactivated or all serving assisting serving cells are deactivated. According to such embodiments, an increase in β*ₕₛ* is typically implemented to ensure that an uplink control channel reaches an assisting serving cell. Thus, when such assisting serving cells are deactivated, user equipment need only transmit the uplink control channel to a serving cell and thus the level at which the uplink control channel is transmitted can revert to that which would be set for single flow HSDPA operation. It will be appreciated that there may be more than one assisting serving cell, in which case the user equipment may be operable, according to some embodiments, to revert to an original gain level once all assisting serving cells are deactivated.

According to some embodiments, a time hysteresis is introduced in relation to a reduction of β*ₕₛ* after an order to increase β*ₕₛ* has been issued by any of the base stations supporting cells in multi-flow HSDPA operation. That is to say, after a base station supporting a cell issues a command to increase β*ₕₛ*, a timer is started at user equipment and whilst that timer is running, if any order to decrease β*ₕₛ* is received from any other cell then the instruction is ignored. Introduction of such a time hysteresis may prevent frequent ping-pong at user equipment regarding the value of β*ₕₛ*.

According to some embodiments, a base station that wishes to maintain an increased power offset for β*ₕₛ* may be operable to reissue an order to increase or maintain a power offset and thus restart any such hysteresis timing at user equipment. According to some embodiments, that reissued order may be transmitted by a base station just before a hysteresis timer would typically expire.

According to some embodiments, just before a hysteresis timer expires the user equipment may be operable to ignore all orders to reduce β*ₕₛ* from all other cells except from the cell that originally issued the increase order which resulted in the timer being started. Such an aspect recognizes that ping-ponging requests to increase or decrease an offset will typically be due to different cells rather than the same cell, and an individual cell would not typically ping-pong its own orders.

According to some embodiments, when an order to increase the offset is received, the user equipment is operable to begin a timer. For the duration of that timer, user equipment may be operable to allow a reduction in an offset, but may not reduce it below the level which resulted from that order which triggered the original timer. That is to say, if an order increases the offset to β*ₗ*, then for the duration of any timer the user equipment may not be operable to reduce the offset below β*ₗ*.

According to some embodiments, if multiple orders have been received by the user equipment before it is operable to implement a first order (that is to say, if multiple orders are received by user equipment within a certain transmit time interval), the user equipment may be operable to only implement an order having the highest increase in offset.

According to some embodiments, the restrictions may comprise ignoring orders to decrease an offset if they come from particular predetermined cells. For example, an instruction or order to decrease an offset from a serving cell may be ignored, or instructions to decrease the offset from assisting cells may be ignored, or from one or more predetermined cells.

According to some embodiments, the offset β*ₕₛ* is not allowed to reduce below a particular threshold, for example, β*_{hs-SC-HSDPA},* and that threshold is sufficient for the serving cell to ensure that it receives an uplink control channel message. Any increase to increase the gain or offset beyond that threshold value will typically be more than sufficient for the serving cell to be able to receive the control signalling. However, increases in an offset beyond β_{*hs*-*SC-HSDPA*} may cause interference, and as a result of managing its RoT a base station may reduce grants to user equipment since the control channel will be eating resource that could be used for data transmissions. Thus, there is no incentive for the serving cell to increase an offset.

According to some embodiments, the orders may indicate either absolute values of an offset or relative changes; that is to say, a step up or step down indication.

Figure 3 illustrates schematically a series of events experienced by user equipment capable of multi-flow operation according to one embodiment. In the illustrative embodiment of Figure 3, the user equipment operates initially in a single cell mode and is configured to communicate with a single base station. User equipment is configured, with an uplink control channel gain (in this case, an HS-DPCCH gain) of β*_{hs-SC-HSDPA}.* That HS-DPCCH gain is configured by the network.

At time T1, user equipment is reconfigured to operate in a multi-flow HSDPA mode and receive HSDPA streams from both a serving cell and an assisting serving cell.

At time T2, the assisting serving cell issues an order to increase uplink control channel gain. The user equipment is operable to implement that order and increase its HS-DPCCH power offset. The user equipment begins a timer T_{order} and during this timer the user equipment is operable to ignore all orders received from either the assisting serving cell or serving cell to reduce the offset. According to some embodiments, there may be some delay before the user equipment implements the order. In Figure 3 that delay is not shown.

At time T3, the serving cell issues an order to further increase an uplink control channel gain. Since this is an increase in gain, the user equipment is operable to implement the order and increase its offset, β*ₕₛ*.

At time T4, the serving cell issues an order to reduce offset. Since, in this illustrative embodiment, the timer T_{order} has not yet expired, the user equipment is operable to ignore the order to reduce the offset received from a serving cell.

At time T5, the timer T_{order} expires.

At time T6, the serving cell is operable to issue an order to reduce the offset to the offset initially set by the network; namely, β_{*hs*-*SC-HSDPA*}. Since T_{order} has expired, the user equipment implements the order to reduce the offset received from the serving cell and reduces its HS-DPCCH power offset to the preset threshold, β*_{hs-SC-HSDPA}.*

At time T7, the assisting serving cell is operable to issue an order to reduce β*ₕₛ*. Since this reduction would cause β*ₕₛ* to fall below the threshold set by the network, in this embodiment the user equipment is operable to ignore the order received from the assisting serving cell.

Aspects reduce the unnecessary fluctuation or ping-pong of the uplink control channel offset value as a result of multi-flow operation and, in particular, conflicting orders sent in layer 1 to user equipment by different base stations in respect of different cells. Aspects allow any cell to issue an order to change uplink control channel offset in relation to a pilot, but also offer the flexibility of increasing as well as reducing that offset.

It will be recognised that any method which involves a reduction in gain implemented by user equipment may cause that gain on the control channel to go below what is required to ensure communication with the serving cell. By imposing a lower bound, user equipment is prevented from allowing the gain to go below what is required for the serving cell. A lower bound therefore covers many implementations and aspects. Simply not allowing a decrease in gain, such that the lower bound is never reached, causes particular problems.

Fluctuation of HS-DPCCH gain is one problem which multi-flow capability may introduce to a network. It is possible to bar any reduction in gain to avoid ping-pong of gain values being received at user equipment. Of course it is also possible to bar any increase in gain, but such an arrangement would defeat the purpose of sending an instruction to increase a gain or offset. Any method in between will typically result in some degree of fluctuation or ping-pong values. By introducing a time during which restrictions to the change of gain are applied, it allows a reduction in likely ping-pong effects. One alternative would be to impose a time restriction when any cell issues an order to reduce the gain, but such arrangements do not fully acknowledge that the reason an order was issued to increase the gain is because an assisting cell could not receive a control channel effectively and such a restriction may simply prevent the assisting cell from receiving suitable control messaging. Furthermore, although time hysteresis due to fluctuation of radio condition is accepted as a method which can be particularly suited to power control, embodiments herein change the gain of a physical channel rather than power control. The fast changes in radio condition are managed by inner loop power control on the pilot (DPCCH). The gain of the HS-DPCCH is always calculated relative to pilot (DPCCH) and thus the absolute power of the physical channel (HS-DPCCH) will always change to adapt to changes in radio condition.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling gain of a physical channel used for communication of control information between user equipment and at least two base stations in a multi-flow telecommunications network, said method comprising:
determining an indication of a gain control restriction;
receiving a gain control message from one of said at least two base stations;
assessing whether implementing a change in gain in accordance with said gain control message would be in accordance with said gain control restriction, and, if so
implementing said change in gain in accordance with said gain control message.

2. A method according to claim 1, wherein said gain control restriction comprises an indication of minimum gain of said physical control channel.

3. A method according to claim 2, wherein said indication of minimum gain of said physical control channel corresponds to a minimum gain of said physical channel required to ensure said physical channel reaches one of said at least two base stations operable to support a serving cell.

4. A method according to claim 3, further comprising:
determining that said user equipment is no longer operating to communicate with at least two base stations in said multi-flow telecommunications network and changing said gain to said minimum gain of said physical channel required to ensure said physical channel reaches one of said at least two base stations operable to support a serving cell.

5. A method according to any preceding claim, wherein said restriction comprises initiation of a timer during which said user equipment is operable to prevent gain control messages having a predetermined characteristic being implemented by said user equipment.

6. A method according to claim 5, comprising initiating said timer on reception of a gain control message requesting an increase in gain from one of said at least two base stations.

7. A method according to claim 5 or claim 6, wherein said predetermined characteristic comprises a request to decrease gain implemented by said user equipment.

8. A method according to any one of claims 5 to 7, wherein said predetermined characteristic comprises a request from one of said at least two base stations supporting a serving cell.

9. A method according to any one of claims 5 to 7, wherein said predetermined characteristic comprises a request from one of said at least two base stations supporting an assisting serving cell.

10. A method according to claim 7, wherein if said request to decrease gain is received from the one of said at least two base stations that sent a message requesting an increase in gain which triggered said timer, said request for decrease is implemented by said user equipment.

11. A method according to any one of claims 5 to 7, wherein said predetermined characteristic comprises a request to reduce gain of said physical channel past a selected threshold.

12. A method according to claim 11, wherein said selected threshold comprises a gain level implemented at said user equipment when initiating said timer.

13. A method according to any preceding claim, wherein said gain control restriction comprises considering gain control messages received by said user equipment from said at least two base stations during a predetermined time period; and assessing comprises selecting and implementing one of said gain control messages requesting a largest increase in gain received during said predetermined time period.

14. A computer program product operable, when executed on a computer, to perform the method of any one of claims 1 to 13.

15. User equipment operable to control gain of a physical channel used for communication of control information between said user equipment and at least two base stations in a multi-flow telecommunications network, said user equipment comprises:
determination logic operable to determine an indication of a gain control restriction;
reception logic operable to receive a gain control message from one of said at least two base stations;
assessment logic operable to assess whether implementing a change in gain in accordance with said gain control message would be in accordance with said gain control restriction, and implementing logic operable to implement said change in gain in accordance with said gain control message if it is assessed to be in accordance with said gain control restriction.
